# EUROPÄISCHE PATENTSCHRIFT

(11) **EP 3 152 465 B1**
(45) Veröffentlichungstag und Bekanntmachung des Hinweises auf die Patenterteilung: **30.11.2022**
(21) Anmeldenummer: 15729078.4
(22) Anmeldetag: 05.06.2015
(51) Int. Cl.: F16H 57/04, F16N 25/04

(54) **ANTRIEB**
DRIVE
DISPOSITIF D'ENTRAÎNEMENT

(30) Priorität: 06.06.2014 DE 202014004715 U; 02.09.2014 DE 202014007164 U
(43) Veröffentlichungstag der Anmeldung: 12.04.2017
(73) Patentinhaber: Liebherr-Components Biberach GmbH, 88400 Biberach an der Riß (DE)
(72) Erfinder: PAAL, Martin, 88400 Biberach an der Riß (DE); WACK, Frowin, 88400 Biberach an der Riß (DE); HAUSLADEN, Norbert, 88400 Biberach an der Riß (DE)
(74) Vertreter: Thoma, Michael
(86) Internationale Anmeldenummer: PCT/EP2015/001147
(87) Internationale Veröffentlichungsnummer: WO 2015/185220

(56) Entgegenhaltungen:
- DE-A1-102012 101 593
- DE-B3- 10 321 535
- DE-U- 1 876 315
- JP-A- S60 104 869
- JP-A- 2001 208 173
- US-A- 4 068 740

## Beschreibung

Die vorliegende Erfindung betrifft einen Antrieb zum Erreichen einer Sollstellung eines Bauteils wie beispielsweise eines Rotorblatts, Kranturms, Oberwagens und dergleichen, mit zumindest zwei miteinander in Zahneingriff stehenden Antriebselementen, von denen zumindest eines von einer Antriebsquelle her antreibbar und das andere mit dem Bauteil verbindbar ist, sowie einer Schmiervorrichtung zum Schmieren der Antriebselemente, wobei zumindest ein Schmiermittelkanal zum Zuführen von Schmiermittel zu einem in Eingriff befindlichen Zahnpaar durch eines der Antriebselemente hindurchgeführt ist.

Bei Antrieben mit miteinander kämmenden Antriebselementen ist es oft ausreichend, das Schmiermittel wie Fett, Schmieröl oder dergleichen an beliebiger Stelle eines Zahnrads oder einer Zahnstange zuzuführen, da sich durch die ständige Abwälzbewegung das Schmiermittel zumindest nach und nach auf alle Zahnflanken verteilt. Die JP 2001-208173 A zeigt einen kontinuierlich laufenden Antrieb, bei dem ein Antriebsritzel über ein zusätzliches, damit kämmendes Schmierritzel geschmiert wird, in dem eine Innenausnehmung, in der ein Schmiermittelverteiler aufgenommen ist, vorgesehen ist. Die JP 60-104869 A zeigt die Schmierung eines Zahnkranzes über ein Schmierritzel, das über eine Freilaufkupplung an eine Schmiermittel-Zufuhrwelle angebunden ist, um eine Schmierung nur in einer Drehrichtung des Zahnkranzes zu bewirken.

Aus der Schrift DE 10 2012 101 593 A1 ist eine Schmiervorrichtung zum Schmieren der Zahnräder eines Azimut-Antriebs einer Windkraftanlage bekannt, wobei das Schmiermittel nicht durch die Zahnräder hindurch zugeführt wird, sondern über eine separate Zuführleitung, die an der Äxiaiseite eines der Zahnräder entlanggeführt und im Eingriffsbereich rechtwinklig abgebogen ist, und in eine Lücke zwischen dem Zahnfuß des einen Zahnrads und der Zahnspitze des anderen Zahnrads führt.

Dies ist jedoch bei sogenannten Pitchantrieben oder allgemein Antrieben, die nur gelegentlich betätigt werden und eine Position oder nur einige wenige Positionen über längere Zeit unter Last halten, anders. Bei langer Verweildauer in einer bestimmten Position kommt es unter dem Einfluss von Schwingungen und damit verbundenen Mikrobewegungen, Lastwechseln oder auch in Folge von Spiel zu Verschleiß an den in Eingriff stehenden Zahnpaaren und/oder zu Tribokorrosion. Die in Eingriff stehenden Zahnflanken solcher über längere Zeit die Position haltender Antriebselemente reiben mit Mikrobewegungen den Schmierstoff ab, sodass die Zahnflanken blank aufeinanderliegen können. Es kommt zu Pittings, Kratzern und Verschleiß.

Antriebe, bei denen keine ständige Umlaufbewegung auftritt, sondern überwiegend bestimmte Zahnpaare einen zeitlich großen Anteil der Last tragen, können beispielsweise bei Windkraftanlagen Verwendung finden, um die Rotorblätter in ihrem Anstellwinkel einzustellen, sowie dies beispielsweise in der Schrift EP 1816346 B1 beschrieben ist. Solche Antriebe können aber auch in Baumaschinen Verwendung finden, beispielsweise in Drehwerken, mittels derer beispielsweise der Turm eines Turmdrehkans oder der Oberwagen eines anderen Krans oder Baumaschinengeräts verdreht werden kann, oder in Hubwerken, mit denen beispielsweise der Ausleger eines Krans in verschiedene Stellungen gebracht werden kann. Andere Anwendungsfälle mit ähnlichen Belastungsfällen finden sich in vielen Bereichen, in denen ein Bauteil in eine Sollstellung gebracht und dort über längere Zeit gehalten wird.

Um auch bei solchen Anwendungsfällen die Zahnflanken ausreichend zu schmieren und vor Pittings, Verschleiß, Kratzern und ähnlichem zu schützen, ist es bekannt, das Schmiermittel unmittelbar auf die in Eingriff befindlichen Zahnflanken zu führen beziehungsweise ein Zahnpaar zu schmieren, wenn es sich im Verzahnungseingriff miteinander befindet. Beispielsweise beschreibt die vorgenannte Schrift EP 1816346 B1 eine Schmiervorrichtung mit einem Schmiermittelkanal, der durch das Innere eines Abtriebsritzels hindurch geführt ist und an einem Zahnfuß endet, sodass Schmiermittel zu den an den Zahnfuß angrenzenden Zahnflanken sowie den dazwischen eingreifenden Zahn eines gegenüberliegenden Zahnrads zugeführt werden kann, das heißt es kann direkt ein in Zahneingriff befindliches Zähnepaar geschmiert werden. Um zu verhindern, dass das Schmiermittel unkontrolliert austritt, wenn die Antriebselemente in eine andere Relativstellung verbracht werden, in der der Schmiermittelkanal nicht mehr zu einem in Eingriff befindlichen Zahnpaar führt, sondern sozusagen in das Freie mündet, kann gemäß der vorgenannten EP 1816346 B1 dem Schmiermittelkanal ein Ventil zugeordnet sein, welches nur öffnet, wenn sich die zu schmierenden Zahnflanken im Eingriff befinden.

Ein solches Ventil ist jedoch relativ aufwendig und teuer sowie auch selbst verschleißanfällig. Zudem ist es schwierig, bei einer Verstellung der Antriebselemente zueinander ein dann anderes in Eingriff befindliches Zähnepaar ausreichend zu schmieren, ohne die Anlage in größerem beziehungsweise längerem Umfang zu verstellen, um durch Verteilungseffekte den an einer Stelle eingebrachten Schmierstoff auch an andere Stellen zu bringen. Überdies wird eine Reduzierung der Baugröße verhindert beziehungsweise erschwert.

Eine Verstellung der Anlage beziehungsweise das Anfahren verschiedener Positionen ist je nach Anlage jedoch bei komplexer werdenden Steuerungsaufgaben in zunehmendem Maße gefordert. Dies gilt beispielsweise auch für die Rotorblätter von Windkraftanlagen, die zur Effizienzsteigerung in zunehmendem Maße beziehungsweise immer genauer an die jeweils herrschenden, bekanntlich schwankenden Windbedingungen angepasst und hierzu in ihrem Anstellwinkel verstellt werden.

Der vorliegenden Erfindung liegt daher die Aufgabe zugrunde, einen verbesserten Antrieb der vorgenannten Art zu schaffen, der Nachteile des Standes der Technik vermeidet und letzteren in vorteilhafter Weise weiterbildet. Insbesondere soll mit einer einfachen, kostengünstigen und kompaktbauenden Anordnung eine ausreichende, präzise Schmierung der gefährdeten Zahnflanken sowohl unter länger stehenden als auch wechselnden Antriebspositionen ermöglicht werden.

Erfindungsgemäß wird die genannte Aufgabe durch einen Antrieb gemäß Anspruch 1 gelöst. Bevorzugte Ausgestaltungen der Erfindung sind Gegenstand der abhängigen Ansprüche.

Es wird also vorgeschlagen, die Zufuhr des Schmiermittels durch einen Verteiler, der dem in das Antriebselement integrierten Schmiermittelkanal vorgeschaltet ist, zu bewerkstelligen und die Verbindung zwischen einem Zuführkanal des Verteilers und dem zumindest einen in das Antriebselement integrierten Schmiermittelkanal durch Relativbewegung zwischen Antriebselement und Verteiler zu steuern. Insbesondere kann die Schmiermittelzufuhr zu dem zumindest einen Schmiermittelkanal des Antriebelements durch Bewegung des Antriebselements gegenüber dem vorgeschalteten Verteiler wahlweise freigeschaltet und unterbrochen beziehungsweise verändert werden. Erfindungsgemäß besitzt die Schmiervorrichtung einen Verteiler mit zumindest einem Zuführkanal, der mit dem mindestens einen Schmiermittelkanal in dem Antriebselement verbindbar ist, wobei das Antriebselement relativ zu dem Verteiler bewegbar ist derart, dass je nach Stellung des Antriebselements relativ zu dem Verteiler der zumindest eine Schmiermittelkanal des Antriebselements mit dem Zuführkanal des Verteilers in Verbindung steht oder von dem genannten Zuführkanal des Verteilers abgeschnitten ist.

Anstelle die Schmiermittelzufuhr am Austritt des integrierten Schmiermittelkanals im Antriebselement unter dort schwierigen Platzbedingungen durch ein Ventil zu steuern, kann die Schmiermittelzufuhr eingangsseitig beziehungsweise am stromaufseitigen Endabschnitt des integrierten Schmiermittelkanals des Antriebselements gesteuert werden. Hierdurch kann eine zusätzliche Ventilbaugruppe am austrittsseitigen Ende des integrierten Schmiermittelkanals des Antriebselements eingespart werden, auch wenn eine solche Ventilbaugruppe gleichwohl weiterhin vorgesehen sein könnte. Durch die relative Bewegbarkeit von Antriebselement und Verteiler kann die Schmiermittelzufuhr dadurch gesteuert werden, dass der Zuführkanal des Verteilers mit dem Schmiermittelkanal des Antriebselements zur Überdeckung miteinander beziehungsweise in Flucht miteinander oder alternativ außer Überdeckung beziehungsweise außer Flucht gebracht wird, sodass die Strömungsverbindung zwischen verteilerseitigem Zuführkanal und Antriebselement des seitigen Schmiermittelkanals freigeschaltet und unterbrochen beziehungsweise zumindest der Größe nach verändert werden kann.

Um verschiedene Zahnflankenpaare schmieren zu können, wenn diese sich im Zahneingriff befinden, können an dem Antriebselement mehrere Schmiermittelkanäle vorgesehen sein, die zu verschiedenen Verzahnungsabschnitten beziehungsweise zu verschiedenen Zähnen des Antriebselements führen. Eingangsseitig sind die genannten mehreren Schmiermittelkanäle vorteilhafterweise derart angeordnet beziehungsweise ausgebildet, dass die verschiedenen Schmiermittelkanäle von demselben Verteiler her gespeist werden können, insbesondere mit dem gleichen Zuführkanal des Verteilers in Strömungsverbindung bringbar sind, und zwar vorteilhafterweise je nach Stellung des Antriebselements relativ zu dem Verteiler. Insbesondere können die Einlassbereiche der mehreren Schmiermittelkanäle, die jeweils in das Antriebselement integriert sein können, entlang einer Bewegungsbahn des Verteilers relativ zum Antriebselement verteilt angeordnet bzw. hintereinander oder voneinenader beabstandet angeordnet sein, sodass bei Relativbewegung des Antriebselements relativ zum Verteiler nacheinander jeweils ein anderer Schmiermittelkanal mit dem Zuführkanal des Verteilers in Strömungsverbindung gerät.

Hierbei kann der Mündungsbereich des Zuführkanals derart bemessen und/oder auf die Beabstandung der Eintrittsbereiche der Schmiermittelkanäle abgestimmt sein, dass je nach Stellung des Antriebselements immer mindestens ein Schmiermittelkanal und/oder höchstens zwei bzw. eine bestimmte Anzahl oder Teilzahl im Sinne einer Untergruppe von Schmiermittelkanälen gleichzeitig mit dem Zuführkanal in Strömungsverbindung stehen, und zwar vorteilhafterweise jeweils immer derjenige oder diejenigen Schmiermittelkanäle, die zu Verzahnungsabschnitten des Antriebselements führen, die in Zahneingriff mit dem Antriebselement stehen.

Die Abstimmung der Position und Geometrie der Mündung des Zuführkanals auf die Position und Geometrie und/oder Beabstandung der Eintrittsöffnungen der Schmiermittelkanäle kann je nach Schmieraufgabe jedoch auch anders ausgebildet sein, beispielsweise dergestalt, dass in zumindest einer bestimmten Stellung des Antriebselements relativ zu dem Verteiler der Zuführkanal vom Antriebselement bzw. einer daran vorgesehenen, an die Eintrittsöffnung eines Schmiermittelkanals anschließenden Verschlußfläche gänzlich verschlossen ist und in zumindest einer weiteren Relativstellung des Antriebselements zumindest ein Schmiermittelkanal mit dem Zuführkanal verbunden ist.

Die Relativkinematik zwischen Antriebselement und Verteiler kann dabei grundsätzlich verschieden beschaffen sein, je nachdem, wie das Antriebselement ausgebildet ist. Ist das Antriebselement ein Abtriebsritzel, das rotatorisch antreibbar ist, können die Schmiermittelkanäle des Antriebselements eingangsseitig auf einem Teilkreis koaxial zur Drehachse des Abtriebsritzels angeordnet sein, sodass die verschiedenen Schmiermittelkanäle nach Art eines Revolvers durch Verdrehen des Abtriebsritzels relativ zum Verteiler mit dessen Zuführkanal in Strömungsverbindung bringbar sind. Durch Weiterdrehen des Antriebselement wird ein jeweils anderer Schmiermittelkanal des Antriebselements mit dem Zuführkanal des Verteilers in Strömungsverbindung gebracht.

Vorteilhafterweise kann das Abtriebsritzel hierbei eine Innenausnehmung umfassen, auf deren Mantelfläche die Schmiermittelkanäle eingangsseitig münden beziehungsweise von der die eingangsseitig ausgehen. Der Verteiler kann in diesem Fall in der genannten, koaxial zur Ritzeldrehachse ausgebildeten Innenausnehmung sitzen, wobei eine Mündung des Zuführkanals des Verteilers außenmantelflächenseitig positioniert sein kann derart, dass die Mündung des Zuführkanals bei Relativverdrehung zwischen Abtriebsritzel und Verteiler über die Innenumfangsfläche der Innenausnehmung des Antriebselements hinwegschleift beziehungsweise hinwegfährt.

Alternativ zu einer solchen umfangsseitigen Anordnung der Einlassöffnungen der Schmiermittelkanäle des Antriebselements und der Mündung des Zuführkanals des Verteilers kann der Verteiler mit der Mündung des Zuführkanals jedoch auch stirnseitig auf dem Antriebselement sitzen, wobei in diesem Fall die Eintrittsöffnungen der Schmiermittelkanäle des Antriebselements vorteilhafterweise auf einem Teilkreis koaxial zur Drehachse des Abtriebsritzels auf dessen Stirnseite vorgesehen sein können. Eine solche stirnseitige Schnittstelle zwischen Verteiler und Antriebselement kann bei besonders kleinen Abtriebsritzeln vorteilhaft sein, um hier im Achsbereich Platz zu schaffen beispielsweise für eine Keilwellenverzahnung oder dergleichen. Andererseits kann bei ausreichenden Platzverhältnissen eine Aufnahme des Verteilers in einer Innenausnehmung beziehungsweise eine umfangsseitige Anordnung der Schnittstelle zwischen antriebselementeseitigem Schmiermittelkanal und verteilerseitigem Zuführkanal vorteilhaft hinsichtlich einer einfachen Fertigung der Schmiermittelkanäle sein, da hier Schrägbohrungen mit ovalen Öffnungsquerschnitten vermieden werden können.

Das Antriebselement muss jedoch nicht zwangsweise ein Abtriebsritzel sein, sondern es kann auch eine Zahnstange als Antriebselement vorgesehen sein, das den genannten, zumindest einen Schmiermittelkanal enthält. Je nach Konzeption des Stellantriebs kann die Antriebselementepaarung auch eine solche Zahnstange und ein damit kämmendes Abtriebsritzel oder auch eine Schneckenwelle und ein damit kämmendes Zahnrad umfassen. Der integrierte Schmiermittelkanal beziehungsweise die genannte Mehrzahl von Schmiermittelkanälen kann dabei in der Zahnstange und/oder in dem Abtriebsritzel und/oder in der Schneckenwelle und/oder in dem Zahnrad vorgesehen sein.

Durch Weiterbewegen des mit Schmiermittelkanälen versehenen Antriebselements kommt jeweils ein anderer der Schmiermittelkanäle mit dem Zuführkanal des Verteilers in Strömungsverbindung.

Das mit dem zumindest einen Schmiermittelkanal versehene Antriebselement kann grundsätzlich das angetriebene Antriebselement oder das antreibende Antriebselement sein. In vorteilhafter Weiterbildung der Erfindung kann das von einer Antriebsquelle her antreibbare Antriebselement mit dem genannten, zumindest einen Schmiermittelkanal versehen sein, um das Schmiermittel von der Antriebsseite her dem kämmenden Zahnpaar zuführen zu können. Hierdurch können Synergieeffekte genutzt werden, da üblicherweise auch die Antriebsseite beziehungsweise die Antriebsquelle oder damit verbundene Getriebegruppen geschmiert werden können.

Wird das Schmiermittel über ein rotatorisch antreibbares Antriebselement zugeführt, können die zuvor genannten mehreren Schmiermittelkanäle vorteilhafterweise sternförmig angeordnet sein, insbesondere von einem gemeinsamen Teilkreis ausgehend zu verschiedenen Zahnfüßen oder Zahnflanken oder Zahnspitzen geführt sein.

Dabei kann die Anzahl der Schmiermittelkanäle grundsätzlich der Zähnezahl des Antriebselements entsprechen, sodass jeder Zahn beziehungsweise jede Zahnflanke über einen entsprechenden Schmiermittelkanal geschmiert werden kann. Alternativ kann es gegebenenfalls aber auch ausreichend sein, weniger Schmiermittelkanäle als Zähne vorzusehen, beispielsweise dann, wenn die anzufahrenden Sollpositionen nicht gleichmäßig über die Stellungen des Antriebselements verteilt sind, sondern nur zwei oder drei oder einige Zahnpaare besonders häufig in Eingriff kommen, weil entsprechende Sollpositionen anzufahren sind.

Die die Schmiermittelzufuhr steuernde Relativbewegung zwischen Antriebselement und Verteiler kann grundsätzlich in verschiedener Weise erzeugt werden. Beispielsweise kann bei stehendem oder auch bewegtem Antriebselement der Verteiler bewegt werden, um die Schmiermittelzufuhr zu einem bestimmten Schmiermittelkanal des Antriebselements abzusperren oder mit einem bestimmten Schmiermittelkanal des Antriebselements in Eingriff zu bringen. In vorteilhafter Weiterbildung der Erfindung kann alternativ hierzu der Verteiler festgehalten beziehungsweise feststehend gelagert sein, wobei die genannte Relativbewegung durch die Antriebsbewegung des Antriebselements zustande kommt.

Bei einer solchen stehenden Anordnung des Verteilers kann der Zuführkanal des Verteilers insbesondere derart orientiert beziehungsweise positioniert sein, dass der Schmiermittelkanal beziehungsweise ein jeweiliger Schmiermittelkanal des Antriebselement dann mit dem verteilerseitigen Zuführkanal in Strömungsverbindung gerät beziehungsweise steht, wenn der Verzahnungsabschnitt des Antriebselements, an dem der genannte jeweilige Schmiermittelkanal mündet, in Verzahnungseingriff mit dem damit zusammenwirkenden Antriebselement steht.

Insbesondere kann bei feststehender Anordnung des Verteilers der Zuführkanal des Verteilers mit seinem Mündungsbereich dem Raumbereich zugewandt sein, in dem die beiden Antriebselemente miteinander in Verzahnungseingriff stehen. Sind beispielsweise die beiden Antriebselemente als Zahnräder ausgebildet und übereinander angeordnet, wobei das unten liegende Antriebselement der Schmiermittelzufuhr dient, kann der diesem unten liegenden Antriebselement zugeordnete Verteiler mit seinem Zuführkanal derart orientiert sein, dass der Zuführkanal im Bereich von 12 Uhr mündet. Dementsprechend gerät ein im Antriebselement vorgesehener Schmiermittelkanal immer dann mit dem Zuführkanal des Verteilers in Strömungsverbindung, wenn der genannte Schmiermittelkanal im Bereich von 12 Uhr orientiert ist, sodass bei näherungsweise radialer Anordnung des Schmiermittelkanals der im Bereich von 12 Uhr liegende Verzahnungsabschnitt und damit der in Verzahnungseingriff befindliche Abschnitt geschmiert wird.

Die Schmiermittelzufuhr zu dem Verteiler kann grundsätzlich in verschiedener Art und Weise erfolgen. Wird über den Verteiler ein von einer Antriebsquelle her antreibbares Abtriebsritzel geschmiert, kann in vorteilhafter Weise die Schmiermittelzufuhr zu dem Verteiler von der Antriebsquelle her erfolgen, insbesondere durch das Innere der Antriebsquelle und/oder eines zwischengeschalteten Getriebes hindurch. Beispielsweise kann ein durch die Antriebsquelle und/oder das Antriebsgetriebe hindurchgehender Zufuhrkanal vorgesehen sein, der mit dem feststehend gehaltenen Verteiler in Verbindung steht. Insbesondere kann eine solche von der Antriebsquellenseite her kommende Zuführleitung koaxial zur Hauptachse eines Antriebsgetriebes und/oder der Hauptachse eines Antriebsmotors geführt sein.

Alternativ zu einer Schmiermittelzufuhr von der Antriebsseite her kann der Verteiler aber auch von einer der Antriebsquelle abgewandten Seite her mit Schmiermittel versorgt werden. Hierdurch kann ein kurzer Zufuhrweg ermöglicht werden.

Um die benötigte Schmiermittelmenge zu minimieren beziehungsweise zu optimieren, kann eine Abdichtung der Antriebselemente beziehungsweise eine Abdichtung zumindest eines der Antriebselemente und/oder des Eingriffsbereichs vorgesehen sein. Beispielsweise kann eine Schmiermittelkappe das Antriebselement abdecken, durch welches das Schmiermittel zugeführt wird, wobei die genannte Schmiermittelkappe vorteilhafterweise auch eine zumindest abschnittsweise Umhüllung des damit kämmenden Antriebselements und/oder eine Abdichtung auch zu diesem damit kämmenden Antriebselement vorsehen kann.

Die Erfindung wird nachfolgend anhand bevorzugter Ausführungsbeispiele und zugehöriger Zeichnungen näher erläutert. In den Zeichnungen zeigen:

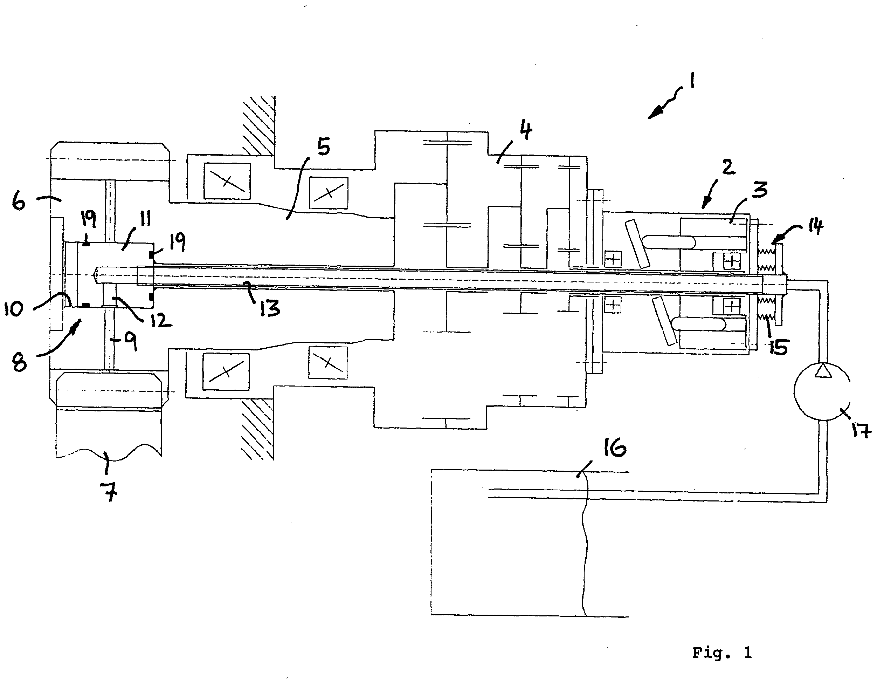

- Figur 1:: Antrieb nach einer vorteilhaften Ausbildung der Erfindung, der als Antriebsquelle einen Schrägscheiben-Hydraulikmotor umfasst und ein Abtriebsritzel antreibt, das integrierte Schmiermittelkanäle aufweist, die von einem Verteiler her gespeist werden können,

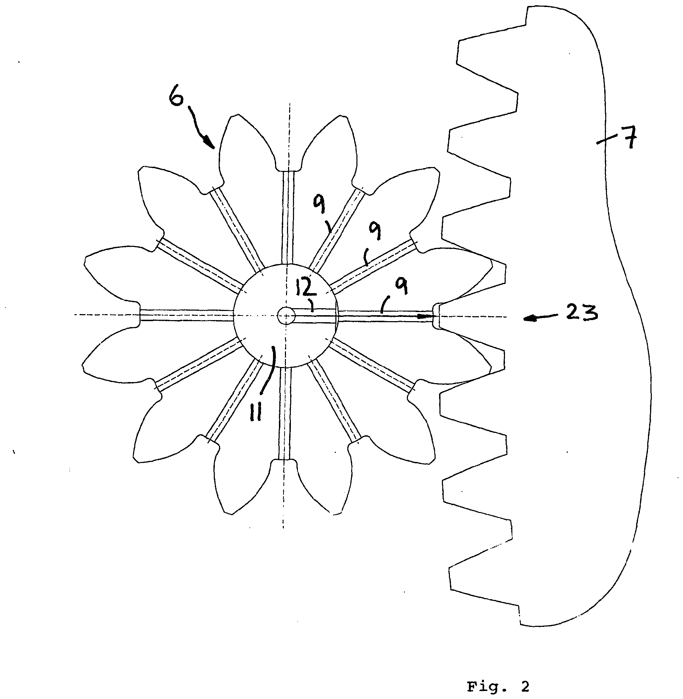

- Figur 2:: eine schematische Draufsicht auf das Abtriebsritzel des Antriebs aus Figur 1 und des damit zusammenwirkenden Zahnrads, das mit einem zu positionierenden Bauteil verbindbar ist, wobei der Verteiler zum Verteilen des Schmiermittels und dessen Verbindung mit einem Schmiermittelkanal des Abtriebsritzels zeigt, der zu dem in Eingriff befindlichen Zahnpaar führt,

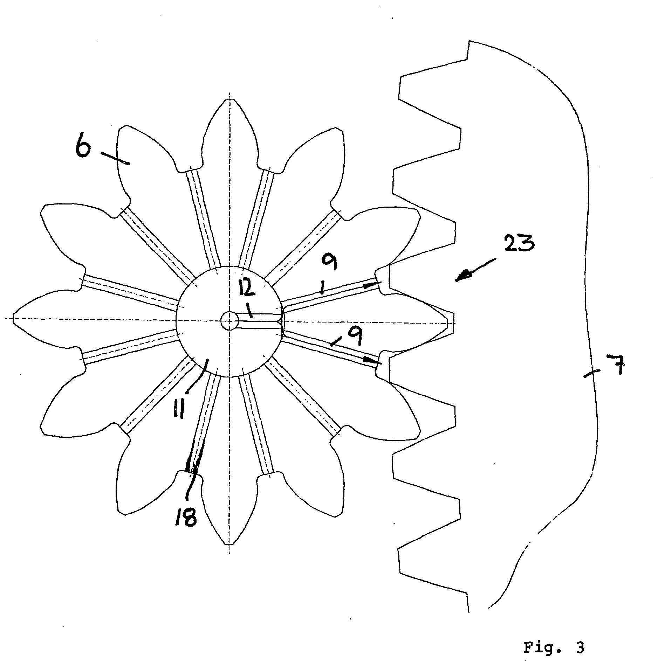

- Figur 3:: eine schematische Draufsicht auf das Abtriebsritzel des Antriebs aus Figur 1 in einer Darstellung ähnlich Figur 2, wobei das Antriebsritzel in einer ein Stück weiter bewegten Position dargestellt ist, in der zwei Schmiermittelkanäle im Inneren des Abtriebsritzels mit dem Zuführkanal des Verteilers in Strömungsverbindung stehen, um zwei in Eingriff befindliche Zahnpaare gleichzeitig zu schmieren,

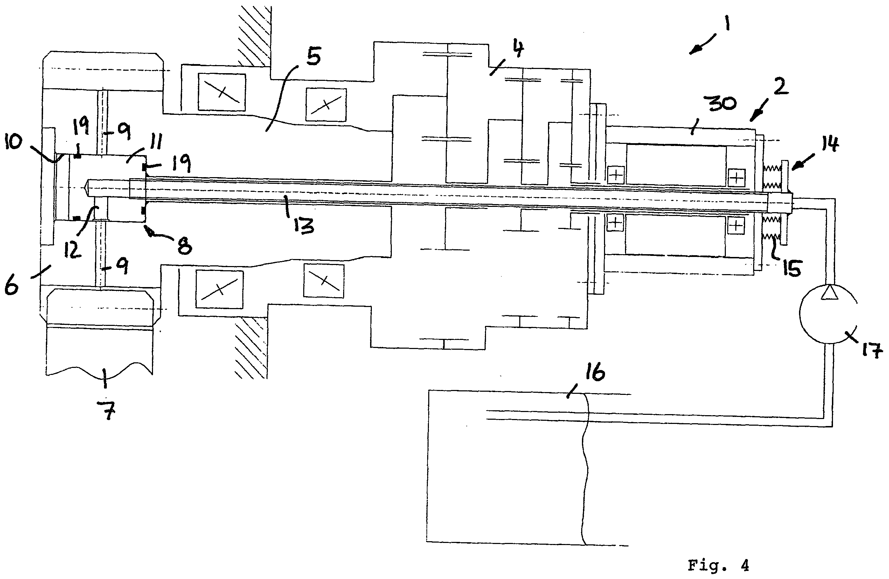

- Figur 4:: eine schematische Darstellung eines Antriebs ähnlich Figur 1, wobei der Stellantrieb nach einer weiteren Ausführung der Erfindung anstelle eines Hydraulikmotors als Antriebsquelle einen Elektromotor besitzt,

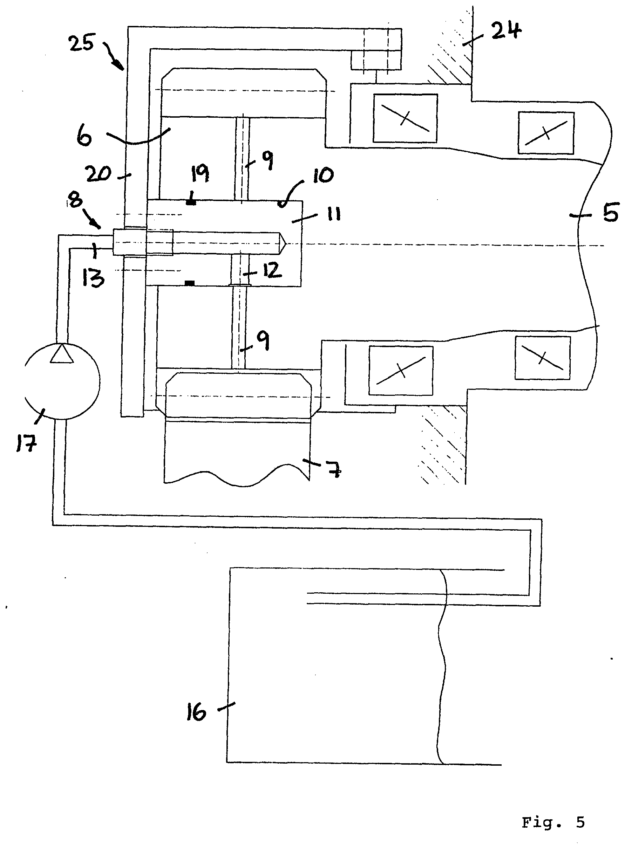

- Figur 5:: eine ausschnittsweise Darstellung des zu schmierenden Antriebselements und des damit verbundenen Verteilers nach einer weiteren Ausführung der Erfindung, wobei die Schmiermittelzufuhr von einer der Antriebsquelle abgewandten Seite des Antriebselements her erfolgt und das Antriebselement durch eine Schmiermittelkappe zumindest teilweise abgedichtet ist,

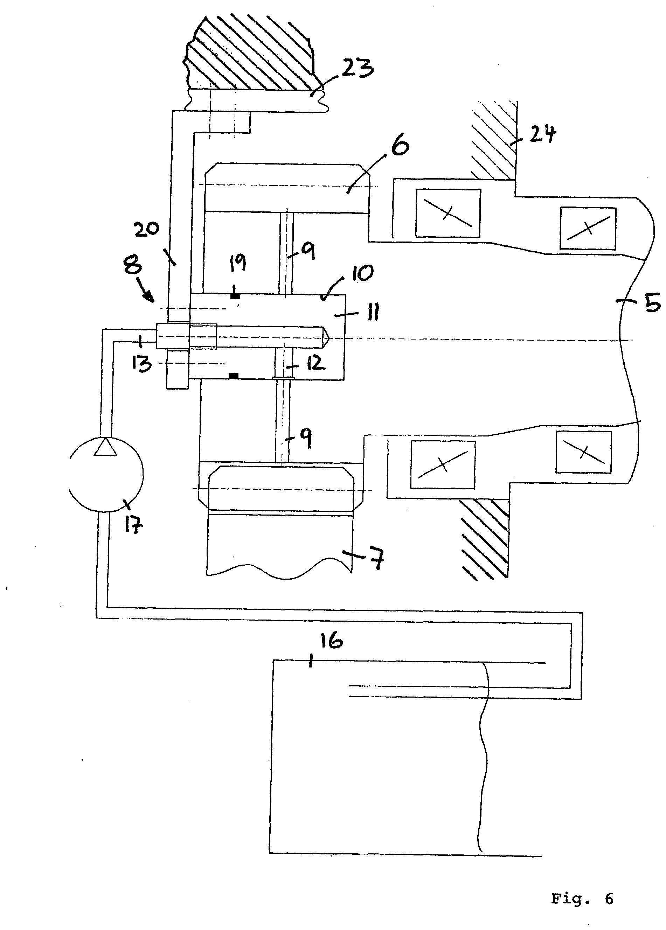

- Figur 6:: eine ausschnittsweise Darstellung des zu schmierenden Antriebselements und des damit verbundenen Verteilers in einer Darstellung ähnlich Figur 5, wobei auch hier die Schmiermittelzufuhr der von der Antriebsquelle abgewandten Seite erfolgt, wobei eine Abdichtung gegenüber dem Gehäuse erfolgt,

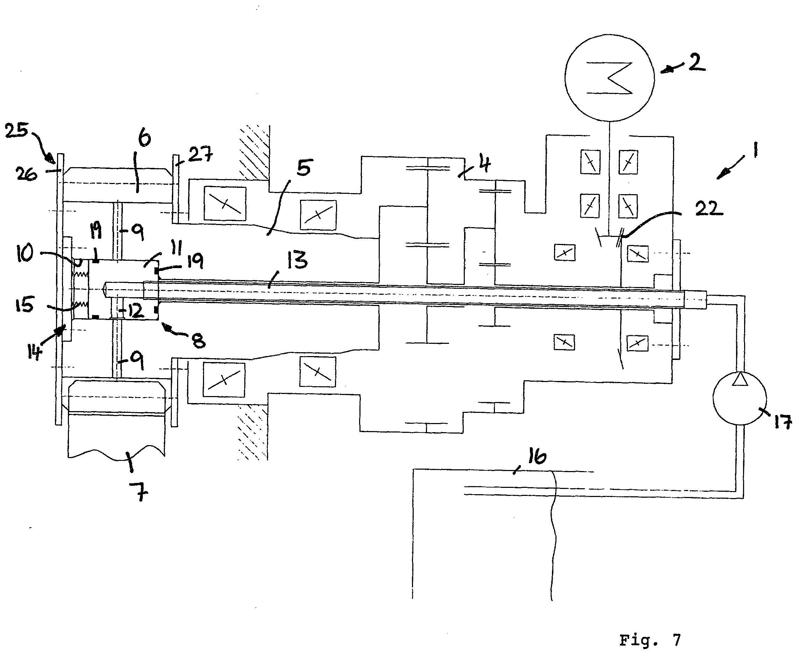

- Figur 7:: eine schematische Darstellung eines Antriebs ähnlich Figur 1 nach einer weiteren Ausführung der Erfindung, wobei die Antriebsquelle über eine Kegelradverzahnung von einer Umfangsseite des Stellantriebs her angebunden ist, wobei eine Fixierung und ein Längenausgleich für den Verteiler auf der Abtriebsseite beziehungsweise der der Antriebsquelle abgewandten Seite des Antriebselements vorgesehen ist, und

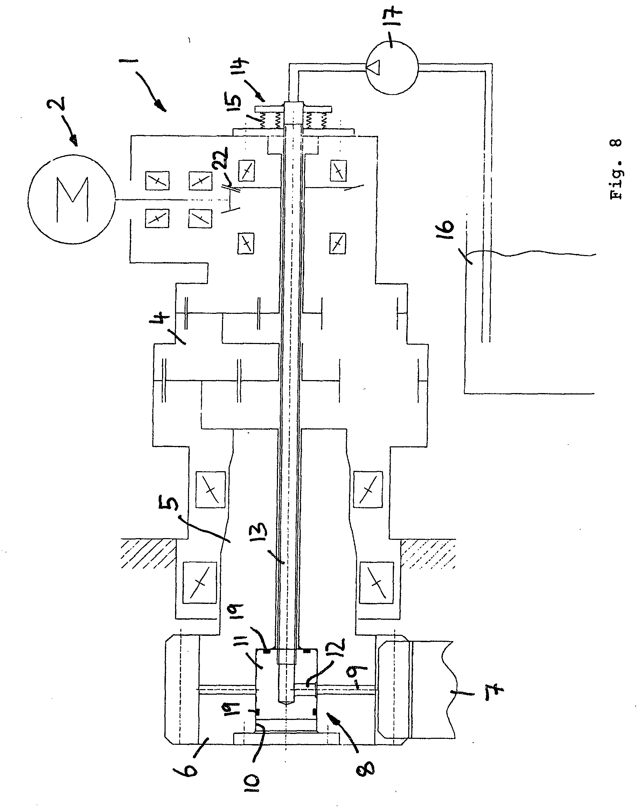

- Figur 8:: eine schematische Darstellung eines Antriebs ähnlich Figur 7 gemäß einer weiteren Ausführung, wobei die Fixierung und der Längenausgleich für den Verteiler auf der Seite der Antriebsquelle vorgesehen ist.

Wie Fig. 1 zeigt, kann der Antrieb 1 als Drehantrieb und/oder Stellantrieb ausgebildet sein und als Antriebsquelle 2 einen Schrägscheibenhydraulikmotor 3 umfassen, der ausgangsseitig ein Getriebe 4 antreibt, das ein- oder mehrstufig ausgebildet sein kann, beispielsweise in Form eines Planetengetriebes.

Das Getriebe 4 kann abtriebsseitig über eine Antriebswelle 5 ein Antriebselement 6 antreiben, das beispielsweise als verzahntes Abtriebsritzel ausgebildet sein kann.

Das von der Antriebsquelle 2 her antreibbare Antriebselement 6 steht in Verzahnungseingriff mit einem weiteren Antriebselement 7, das je nach Ausbildung der anzutreibenden Gerätschaft ebenfalls als Zahnrad ausgebildet sein kann, beispielsweise in Form eines außenverzahnten Antriebselements. Alternativ kann das genannte Antriebselement 7 aber auch eine Zahnstange sein, wenn eine rotatorische Antriebsbewegung in eine lineare Antriebsbewegung gewandelt werden soll.

Das anzutreibende Bauteil, das mit dem Antriebselement 7 verbindbar ist, kann grundsätzlich verschieden beschaffen sein, beispielsweise ein Rotorblatt einer Windkraftanlage sein, wobei wie eingangs erwähnt aber auch andere Anwendungen möglich sind. Mittels des Antriebs 1 kann bspw. der Anstellwinkel des Rotorblatts eingestellt bzw. verstellt werden.

Wie Fig. 1 zeigt, kann der Antrieb 1 eine koaxiale Bauweise besitzen, wobei das Antriebselement 6 mit der Abtriebswelle 5 und/oder mit dem Getriebe 4 und/oder mit der Antriebsquelle 3 und/oder Untergruppen dieser Bauelemente koaxial zueinander angeordnet sind.

Wie die Figuren 1-3 zeigen, kann mittels einer Schmiervorrichtung 8 eine in Wälzeingriff stehende Antriebsbaugruppe umfassend die vorgenannten Antriebselemente 6 und 7 geschmiert werden, wobei eine Schmiermittelzufuhr vorteilhafterweise gezielt zu den in Wälzeingriff, insbesondere Verzahnungseingriff stehenden Abschnitten der beiden Antriebselemente 6 und 7 erfolgen kann. Wie die Figuren 2 und 3 zeigen, kann das Schmiermittel gezielt zu den in Verzahnungseingriff stehenden Zahnpaaren geführt werden.

Das von der Antriebsquelle 2 antreibbare Antriebselement 6 kann hierbei eine Mehrzahl von Schmiermittelkanälen 9 umfassen, die in das Innere des Antriebselements 6 eingearbeitet sein können bzw. in das genannte Antriebselement 6 integriert sein können. Insbesondere können die genannten Schmiermittelkanäle 9 etwa sternförmig verteilt angeordnet sein und zu jeweils verschiedenen Verzahnungsabschnitten des Antriebselements 6 führen. Vorteilhafterweise können die Schmiermittelkanäle 9 mündungsseitig in den Zahnfußbereichen zwischen den Zahnflanken des Antriebselements 6 münden.

Eintrittsseitig können die Schmiermittelkanäle 9 von einer Innenausnehmung 10 des Antriebselements 6 aus ausgehen, wobei die genannte Innenausnehmung 10 ein beispielsweise zylindrischer oder kegeliger Hohlraum koaxial zur Drehachse des Antriebselements 6 sein kann. Die genannte Innenausnehmung 10 kann dabei als topfförmiges Sackloch, das ggf. durch einen Deckel verschließbar sein kann, oder auch als Durchgangsausnehmung ausgebildet sein.

Die genannten Schmiermittelkanäle 9 können von der Umfangsfläche der genannten Innenausnehmung 10 ausgehen und in der genannten Weise sternförmig zu den Zahnfüßen des Verzahnungsabschnitts führen, vgl. Fig. 2.

Die genannten Schmiermittelkanäle 9 können von der Schmiervorrichtung 8 mittels eines Verteilers 11 mit Schmiermittel gespeist werden, wobei der genannte Verteiler 11 vorteilhafterweise in der genannten Innenausnehmung 10 des Antriebselements 6 aufgenommen sein kann.

Der Verteiler 11 besitzt einen Zuführkanal 12, dessen Mündung sich am Verteiler 11 außenumfangsseitig befindet und der Umfangswandung der Innenausnehmung 10 zugewandt ist. Der Verteiler 11 kann insgesamt einen rotationssymmetrischen Korpus umfassen, der an die Innenausnehmung 10 formangepasst sein kann, beispielsweise ein Zylinderkorpus oder ein Kegelkorpus oder auch ein stufig abgefaster Rotationskorpus. Gegebenenfalls kann der Verteiler 11 jedoch auch anders konturiert sein, beispielsweise als Speichenkorpus, der nur abschnittsweise an der Innenausnehmung 10 anliegt bzw. dieser zugewandt ist.

Der genannte Zuführkanal 12 kann aus dem Verteiler 11 stirnseitig herausgeführt sein.

Wie die Figuren 2 und 3 verdeutlichen, ist der Zuführkanal 12 des Verteilers 11 mit zumindest einem der Schmiermittelkanäle 9 des Antriebselements 6 in Strömungsverbindung bzw. in Überdeckung bringbar, so dass aus dem Zuführkanal 12 austretendes Schmiermittel in den zumindest einen Schmiermittelkanal 9 des Antriebselements 6 eintritt.

Der Verteiler 11 kann vorteilhafterweise feststehend bzw. rotatorisch fest angeordnet sein, so dass der Zuführkanal 12 des Verteilers 11 eine feste Ausrichtung besitzt. Durch Relativbewegung des Antriebselements 6 kann gesteuert werden, welcher Schmiermittelkanal 9 des Antriebselements 6 mit dem Zuführkanal 12 des Verteilers 11 in Strömungsverbindung gerät. Insbesondere ist der Zuführkanal 12 des feststehenden Verteilers 11 derart orientiert, dass jeweils derjenige Schmiermittelkanal 9, der zu dem jeweils gerade in Zahneingriff befindlichen Verzahnungsabschnitt des Antriebselements 6 führt, mit dem Zuführkanal 12 des Verteilers 11 in Strömungsverbindung gerät.

Hierzu kann der genannte Zuführkanal 12 insbesondere dem Raumbereich 23 zugewandt sein, in dem der Verzahnungseingriff bzw. Wälzeingriff zwischen Antriebselement 6 und Antriebselement 7 erfolgt.

Wie ein Vergleich der Figuren 2 und 3 zeigt, kann der Mündungsbereich des Zuführkanals 12 dabei derart bemessen und/oder auf die Beabstandung der Eintrittsbereiche der Schmiermittelkanäle 9 abgestimmt sein, dass je nach Drehstellung des Antriebselements 6 immer mindestens ein Schmiermittelkanal 9 und/oder höchstens zwei Schmiermittelkanäle 9 gleichzeitig mit dem Zuführkanal 12 in Strömungsverbindung stehen, und zwar vorteilhafterweise jeweils immer derjenige oder diejenigen Schmiermittelkanäle 9, die zu Verzahnungsabschnitten des Antriebselements 6 führen, die in Zahneingriff mit dem Antriebselement 7 stehen.

Die Abstimmung der Position und Geometrie der Mündung des Zuführkanals 12 auf die Position und Geometrie und/oder Beabstandung der Eintrittsöffnungen der Schmiermittelkanäle 9 kann je nach Schmieraufgabe jedoch auch anders ausgebildet sein, beispielsweise dergestalt, dass in zumindest einer bestimmten Stellung des Antriebselements 6 relativ zu dem Verteiler 11 der Zuführkanal 12 gänzlich verschlossen ist und in zumindest einer weiteren Relativstellung des Antriebselements 6 zumindest ein Schmiermittelkanal 9 mit dem Zuführkanal 12 verbunden ist.

Die Schmiermittelzufuhr zu dem genannten Verteiler 11 kann von einer Stirnseite des Verteilers 11 her erfolgen, wobei eine Versorgungsleitung 13 stirnseitig an den Verteiler 11 angeschlossen bzw. damit in Strömungsverbindung stehen kann.

Wie Fig. 1 zeigt, kann die Schmiermittelversorgung vorteilhafterweise von der Seite der Antriebsquelle 2 her erfolgen, wobei in vorteilhafter Weiterbildung der Erfindung die Versorgungsleitung 13 koaxial durch die Antriebswelle 5 und/oder durch das Getriebe 4 und/oder durch die Antriebsquelle 2 hindurch geführt sein kann. Ein solches Hindurchführen der Schmiermittelversorgung durch den Stellantrieb bzw. zumindest durch einzelne Baugruppen des Stellantriebs kann dazu genutzt werden, an einzelnen Stellen Schmiermittel schon vor dem Verteiler 11 abzuzweigen bzw. austreten zu lassen, beispielsweise im Getriebebereich oder an Lagerstellen, beispielsweise indem an der Versorgungsleitung 13 umfangsseitig abgehende Austrittsöffnungen vorgesehen werden.

In vorteilhafter Weiterbildung der Erfindung kann die Versorgungsleitung 13 zur Lagerung des Verteilers 11 genutzt werden, insbesondere um den Verteiler 11 rotatorisch festzuhalten. Beispielsweise kann der Verteiler 11 fest an der feststehenden Versorgungsleitung 13 befestigt sein. Alternativ kann jedoch die Versorgungsleitung 13 auch unabhängig von der Lagerung des Verteilers 11 zu diesem Verteiler 11 geführt sein, wobei in diesem Fall beispielsweise ein Hohlrohr durch den Stellantrieb 1 hindurchgeführt sein kann, welches dann wiederum die Lagerfunktion für den Verteiler 11 übernehmen kann und in dessen Innenraum sich die Versorgungsleitung 13 erstrecken kann.

Wie Fig. 1 zeigt, kann die rotatorische Arretierung mittels einer Lagerung des genannten Durchgangsrohres und/oder der Versorgungsleitung 13 auf der Seite der Antriebsquelle 2 vorgesehen sein, wobei eine entsprechende rotatorisch feste Lagerung 14 einen Längenausgleich zulassen kann, welcher durch die in Fig. 1 zu sehenden Federelemente 15 angedeutet ist.

Die Versorgungsleitung 13 wird von einem Schmiermittelreservoir 16 aus mittels einer Schmiermittelpumpe 17 oder einem anderen geeigneten Fördermittel beschickt, um durch die Versorgungsleitung 13 hindurch den Verteiler 11 mit Schmiermittel zu versorgen, von dem aus wiederum das Schmiermittel an die entsprechenden Schmiermittelkanäle 9 des Antriebselements 6 verteilt wird, wie zuvor beschrieben.

Der Schmiermittelaustritt an der Mündung des jeweiligen Schmiermittelkanals 9 kann beispielsweise mittels einer Schmiermitteldüse erfolgen, die austrittsseitig den Schmiermittelkanälen 9 zugeordnet sein kann, beispielsweise im Bereich der Zahnfüße angeordnet sein kann. Mittels einer solchen Schmiermitteldüse, die der Sprühschmierung und/oder der Schmierstoffeinsparung dienen kann, kann ein bestimmter Staudruck erzeugt werden, welcher auch zur Überwachung des Schmiersystems genutzt werden kann.

Wie Fig. 1 zeigt, kann der Verteiler 11 in der Innenausnehmung 10 des Antriebselements 6 mittels Dichtelementen 19 abgedichtet sein, beispielsweise in Form von Ringdichtungen, um einen ungewollten Fehlaustritt des Schmiermittels zu vermeiden bzw. einen Schmiermittelaustritt gezielt nur über die Schmiermittelkanäle 9 zu begrenzen.

Wie Fig. 4 zeigt, kann der Stellantrieb 1 als Antriebsquelle 2 auch andere Motoren umfassen, beispielsweise einen Elektromotor 30 anstelle des in Fig. 1 gezeigten Hydraulikmotors 3. Im Übrigen entspricht die Ausführung der Fig. 4 im Wesentlichen der Ausführung der Fig. 1, so dass zur Vermeidung von Wiederholungen hierauf verwiesen wird.

Die Versorgungsleitung 13 und/oder ein die Versorgungsleitung 13 umgebendes Durchführungsrohr, durch das sich die Schmiermittelversorgungsleitung 13 erstrecken kann, kann bei Verwendung eines solchen Elektromotors 30 durch dessen Rotor hindurch geführt sein, vgl. Fig. 4.

Wie Fig. 5 zeigt, kann die Schmiermittelversorgung des Verteilers 11 alternativ oder zusätzlich zu einer Schmiermittelversorgung von der Seite der Antriebsquelle 2 her auch von einer der Antriebsquelle 2 abgewandten Seite des Antriebselements 6 her erfolgen. Die Versorgungsleitung 13 kann hierbei ebenfalls stirnseitig zu dem Verteiler 11 geführt sein bzw. stirnseitig an den Verteiler 11 angeschlossen sein.

Bei einer solchen Schmiermittelversorgung von der dem Getriebe 4 und/oder der Antriebsquelle 2 abgewandten Seite des Antriebselements 6 her kann die Lagerung des Verteilers 11 in einfacher Weise auch von dieser genannten abgewandten Seite her erfolgen. Beispielsweise kann der Verteiler 11 rotatorisch feststehend an einer Lagerplatte 20 und/oder einem Tragarm oder einem anderen Lagerträger befestigt sein, der beispielsweise am Getriebegehäuse des Getriebes 4, einem anderen Gehäusebauteil oder einem anderen feststehenden Bauteil des Stellantriebs angelenkt bzw. befestigt sein kann.

Wie Fig. 5 zeigt, kann die genannte Lagerplatte 20 dabei vorteilhafterweise in Form einer Schmiermittelkappe 25 ausgebildet sein, die zumindest teilweise das Antriebselement 6 umgibt und hierdurch einen ungewollten Schmiermittelaustritt verhindert. Beispielsweise kann die genannte Schmiermittelkappe 25 am Getriebegehäuse 24 dichtend angebracht sein und/oder gegenüber dem in Wälzeingriff befindlichen Abschnitt des Antriebselements 7 gedichtet sein, beispielsweise in Form einer Labyrinth- und/oder Schleifdichtung.

Wie Fig. 6 zeigt, kann die zuvor genannte Lagerplatte 20 bzw. ein entsprechendes Lagerteil zum rotatorisch festen Halten des Verteilers 11 auch an einem abtriebsseitigen Gehäuseteil 21 befestigt sein und/oder an diesem dichtend befestigt sein.

Wie Fig. 7 zeigt, kann die Antriebsquelle 2 in Form eines geeigneten Motors auch seitlich an den Antriebsstrang des Stellantriebs 1, insbesondere die Getriebeeingangswelle des Getriebes 4 angebunden sein, beispielsweise über eine Stirnradgetriebe 22, ein Kegelradgetriebe oder ein Schneckengetriebe.

Die Schmiermittelkappe 25 kann in Form zweier Deckscheiben 26 und 27 ausgeführt sein.

Im Zusammenspiel mit einer solchen seitlichen Antriebsquellenanbindung oder auch unabhängig hiervon kann die rotatorische Festlegung des Verteilers 11 auch auf der dem Getriebe 4 bzw. der Antriebsquelle 2 abgewandten Seite des Antriebselements 6 erfolgen, wie dies die Lagerung 14 andeutet, deren Federn 15 den Längenausgleich gegenüber dem Antriebsstrang umfassend das Antriebselement 6, die Antriebsquelle 5 und/oder das Getriebe 4 verdeutlichen. Hierbei kann die Schmiermittelversorgung des Verteilers 11 wiederum von der Antriebsseite her erfolgen, insbesondere mittels einer Versorgungsleitung 13, die sich koaxial durch die Abtriebswelle 5 und/oder das Getriebe 4 und/oder die Stirnradstufe 22 hindurch erstrecken kann. Hierbei kann die Versorgungsleitung 13 selbst ein feststehendes Rohr bilden oder auch als Schlauch oder Rohr ausgebildet sein, das in einem Aufnahmerohr aufgenommen ist.

Wie Fig. 8 zeigt, kann auch bei einer seitlichen Anbindung der Antriebsquelle 2, wie sie sowohl Fig. 7 als auch Fig. 8 zeigt, die rotatorische Fixierung und ein Längenausgleich der Lagerung des Verteilers 11 an der Antriebsquellenseite des Stellantriebs 1 erfolgen, wobei hier die Lagerung 14 stirnseitig am Stellantrieb 1 fixiert ist und die Versorgungsleitung 13 oder ein diese Versorgungsleitung 13 umhüllendes Lagerrohr rotatorisch festhält, axial jedoch nachgiebig lagert, wie dies die Federn 15 andeuten. Es versteht sich, dass die genannten Federn 15 nur symbolisch die Nachgiebigkeit verdeutlichen sollen, jedoch auch eine axiale Nachgiebigkeit ohne Federwirkung vorgesehen sein kann.

## Patentansprüche

1. Stellantrieb zum Einstellen und Halten einer Sollstellung eines Bauteils wie eines Rotorblatts, Kranturms, Oberwagens und dergleichen, mit einer Antriebsquelle (2) zum Verstellen des Bauteils über zumindest zwei miteinander in Zahneingriff stehende Antriebselementen (6, 7), von denen mindestens eine von der Antriebsquelle (2) her angetrieben ist und das andere ein Abtriebselement bildet, das mit dem Bauteil verbindbar ist, sowie einer mindestens einem Antriebselement zugeordneten Schmiervorrichtung (8) zum Schmieren der Antriebselemente (6, 7) auch in einer stehenden Antriebsposition **dadurch gekennzeichnet, dass** zumindest ein Schmiermittelkanal (9) zum Zuführen von Schmiermittel zu zumindest einem in Eingriff befindlichen Zahnpaar durch mindestens eines der Antriebselemente (6) hindurch geführt ist und in einem Zahnfußbereich des Antriebselements (6) mündet, wobei die Schmiervorrichtung (8) einen Verteiler (11) mit zumindest einem Zuführkanal (12) aufweist, der mit dem zumindest einen Schmiermittelkanal (9) in dem zumindest einen Antriebselement (6) verbindbar ist, wobei das Antriebselement (6) relativ zu dem Verteiler (11) bewegbar ist derart, dass je nach Stellung des Antriebselements (6) relativ zum Verteiler (11) der zumindest eine Schmiermittelkanal (9) des zumindest einen Antriebselements (6) mit dem zumindest einen Zuführkanal (12) des Verteilers (11) in Verbindung steht oder von dem zumindest einen genannten Zuführkanal (12) des Verteilers (11) abgeschnitten ist.

2. Stellantrieb nach dem vorhergehenden Anspruch, wobei das Antriebselement (6) mehrere Schmiermittelkanäle (9) aufweist, die voneinander beabstandet angeordnet sind derart, dass durch Bewegen des Antriebselements (6) relativ zum Verteiler (11) wahlweise jeweils zumindest ein Schmiermittelkanal (9) mit dem zumindest einen Zuführkanal (12) verbindbar und jeweils zumindest ein anderer Schmiermittelkanal (9) von dem zumindest einen Zuführkanal (12) abtrennbar ist.

3. Stellantrieb nach dem vorhergehenden Anspruch, wobei die Kontur der Mündung des zumindest einen Zuführkanals (12) und die jeweilige Position und Kontur der mehreren Schmiermittelkanäle (9) derart aufeinander abgestimmt sind, dass bei Bewegen des Antriebselements (6) relativ zum Verteiler (11) stets mindestens ein Schmiermittelkanal (9) mit dem zumindest einen Zuführkanal (11) verbunden ist und/oder stets höchstens zwei Schmiermittelkanäle (9) gleichzeitig mit dem Zuführkanal (12) in Verbindung stehen.

4. Stellantrieb nach einem der vorhergehenden Ansprüche, wobei das den zumindest einen Schmiermittelkanal (9) aufweisende Antriebselement (6) ein rotatorisch antreibbares Abtriebsritzel mit einer Außen- und/oder Innenverzahnung ist, das gegenüber dem Verteiler (11) verdrehbar ist, wobei die Austrittsöffnung des zumindest einen verteilerseitigen Zuführkanals (12) und die Eintrittsöffnung des antriebselementeseitigen Schmiermittelkanals (9) im Bereich eines gemeinsamen Teilkreises konzentrisch zur Drehachse des Antriebselements (7) angeordnet sind.

5. Stellantrieb nach dem vorhergehenden Anspruch, wobei das Antriebselement (6) mehrere sternförmig angeordnete Schmiermittelkanäle (9) aufweist, deren Eintrittsöffnung auf einem gemeinsamen Teilkreis konzentrisch zur Drehachse des Antriebselements (6) liegen.

6. Stellantrieb nach dem vorhergehenden Anspruch, wobei mehrere sternförmig angeordnete Schmiermittelkanäle in verschiedenen in axialer Richtung versetzen Ebenen liegen.

7. Stellantrieb nach einem der drei vorhergehenden Ansprüche, wobei das Antriebselement (6) eine Innenausnehmung (10) aufweist, in der der Verteiler (11) zumindest teilweise aufgenommen ist, wobei die zumindest eine Eintrittsöffnung des zumindest einen Schmiermittelkanals (9) des Antriebselements (6) an einer Umfangsfläche der Innenausnehmung (10) angeordnet ist und die Mündung des zumindest einen Zuführkanals (12) des Verteilers (11) auf einer Umfangsseite des Verteilers (11) liegt.

8. Stellantrieb nach einem der Ansprüche 4 bis 5, wobei der Verteiler (11) und das Antriebselement (6) einander zugewandte Stirnflächen aufweisen, an denen der zumindest eine Schmiermittelkanal (9) des Antriebselements (6) und der zumindest eine Zuführkanal (12) des Verteilers (11) jeweils Öffnungen besitzen, die auf einem gemeinsamen Teilkreis konzentrisch zur Drehachse des Antriebselements (6) liegen.

9. Stellantrieb nach einem der vorhergehenden Ansprüche, wobei der Verteiler (11) gegenüber dem Antriebselement (6) mittels zumindest einem Dichtelement (19) abgedichtet ist derart, dass aus dem zumindest einen Zuführkanal (12) austretendes Schmiermittel nur über den zumindest einen Schmiermittelkanal (9) des Antriebselements (6) austreten kann.

10. Stellantrieb nach einem der vorhergehenden Ansprüche, wobei der Verteiler (11) rotatorisch feststehend angeordnet ist, wobei der zumindest eine Zuführkanal (12) des Verteilers (11) derart ausgerichtet ist, dass eine Mündung des Zuführkanals (12) einem Raumbereich (R) zugewandt ist, in dem das zumindest eine Antriebselement (6) mit dem genannten anderen Antriebselement (7) kämmt.

11. Stellantrieb nach einem der vorhergehenden Ansprüche, wobei der Verteiler (11) von einer Antriebsquellenseite des Stellantriebs (1) her mit Schmiermittel versorgbar ist, wobei eine Versorgungsleitung (13) der Schmiervorrichtung (8), die mit dem Verteiler (11) strömungsverbunden ist, durch eine mit dem Antriebselement (6) verbundene Abtriebswelle (5) und/oder durch ein Getriebe (4) und/oder durch eine Antriebsquelle (2) des Stellantriebs (1) hindurch geführt ist, vorzugsweise koaxial hindurch geführt ist, wobei der Verteiler (11) rotatorisch fest an der genannten Versorgungsleitung (13) und/oder rotatorisch fest an einem die genannte Versorgungsleitung (13) aufnehmenden Lagerrohr, das sich durch die genannte Abtriebswelle (5) und/oder durch das Getriebe (4) und/oder durch die Antriebsquelle (2) hindurch erstreckt, gelagert ist, wobei die Versorgungsleitung (13) und/oder das die Versorgungsleitung (13) aufnehmende Lagerrohr axial nachgiebig und/oder axial verschiebbar an einer dem Antriebselement (6) gegenüberliegenden Stirnseite des Stellantriebs gelagert ist.

12. Stellantrieb nach einem der vorhergehenden Ansprüche, wobei der Verteiler (11) von einer der Antriebsquelle (2) gegenüberliegenden Seite des Antriebselements (6) her mit Schmiermittel versorgbar ist und/oder an der der Antriebsquelle (2) gegenüberliegenden Seite des Antriebselements (6) rotatorisch fest gelagert ist.

13. Stellantrieb nach einem der vorhergehenden Ansprüche, wobei das den zumindest einen Schmiermittelkanal (9) aufweisende Antriebselement (6) zumindest teilweise, vorzugsweise vollständig von einer Schmiermittelkappe (25) umschlossen ist, die an einem antriebs- oder abtriebsseitigen Gehäuseteil abgestützt, insbesondere dichtend befestigt ist, wobei der Verteiler (11) durch die Schmiermittelkappe (25) rotatorisch fest gelagert ist und die Schmiermittelkappe (25) aus zumindest einer, vorzugsweise zwei Deckscheiben (26,27) ausgeführt ist.

14. Stellantrieb nach einem der vorhergehenden Ansprüche, wobei der zumindest eine Schmiermittelkanal (9) des Antriebselements (6) in einem Mündungsbereich mit einer Schmiermitteldüse (18) zum Versprühen des Schmiermittels und/oder zum Erzeugen eines Staudrucks für das Schmiermittel versehen ist.

## Claims

1. An actuator for setting and maintaining a desired position of a component such as a rotor blade, a crane tower, a superstructure and the like, having a drive source (2) for adjusting the component via at least two mutually meshing drive elements (6, 7), of which at least one is driven from the drive source (2) and of which the other forms a drive element that is connectable to the component; and having a lubrication apparatus (8) associated with at least one drive element for lubricating the drive elements (6, 7), also in a stationary position, **characterized in that** at least one lubricant passage (9) is guided through at least one of the drive elements (6) for supplying lubricant to at least one meshing tooth pair and opens into a dedendum region of the drive element (6), with the lubrication apparatus (8) having a distributor (11) having at least one supply passage (12) that is connectable to the at least one lubricant passage (9) in the at least one drive element (6), with the drive element (6) being movable relative to the distributor (11) such that the at least one lubricant passage (9) of the at least one drive element (6) is connected to the at least one supply passage (12) of the distributor (11) or is cut off from the at least one named supply passage (12) of the distributor (11) in dependence on the position of the drive element (6) relative to the distributor (11).

2. An actuator in accordance with the preceding claim, wherein the drive element (6) has a plurality of lubricant passages (9) that are arranged spaced apart from one another such that a respective at least one lubricant passage (9) is selectively connectable to the at least one supply passage (12) and a respective at least one other lubricant passage (9) can selectively be cut off from the at least one supply passage (12) by a movement of the drive element (6) relative to the distributor (11).

3. An actuator in accordance with the preceding claim, wherein the contour of the opening of the at least one supply passage (12) and the respective position and contour of the plurality of lubricant passages (9) are coordinated with one another such that, on a movement of the drive element (6) relative to the distributor (11), at least one lubricant passage (9) is always connected to the at least one supply passage (11) and/or such that at most two lubricant passages (9) are always simultaneously connected to the supply passage (12).

4. An actuator in accordance with one of the preceding claims, wherein the drive element (6) having the at least one lubricant passage (9) is a rotationally drivable output pinion that has an external gearing and/or an internal gearing and that is rotatable with respect to the distributor (11), with the outlet opening of the at least one supply passage (12) at the distributor side and the inlet opening of the lubricant passage (9) at the drive element side being arranged in the region of a common part circle concentric to the axis of rotation of the drive element (7).

5. An actuator in accordance with the preceding claim, wherein the drive element (6) has a plurality of lubricant passages (9) that are arranged in star shape and whose inlet openings lie concentrically to the axis of rotation of the drive element (6) on a common part circle.

6. An actuator in accordance with the preceding claim, wherein a plurality of lubricant passages arranged in star shape are disposed in different planes offset in an axial direction.

7. An actuator in accordance with one of the three preceding claims, wherein the drive element (6) has an inner recess (10) in which the distributor (11) is at least partly received, with the at least one inlet opening of the at least one lubricant passage (9) of the drive element (6) being arranged at a peripheral surface of the inner recess (10) and with the opening of the at least one supply passage (12) of the distributor (11) being disposed on a peripheral side of the distributor (11).

8. An actuator in accordance with one of the claims 4 to 5, wherein the distributor (11) and the drive element (6) have mutually facing end faces at which the at least one lubricant passage (9) of the drive element (6) and the at least one supply passage (12) of the distributor (11) each have openings that are disposed on a common part circle concentrically to the axis of rotation of the drive element (6).

9. An actuator in accordance with one of the preceding claims, wherein the distributor (11) is sealed with respect to the drive element (6) by means of at least one sealing element (19) such that lubricant exiting from the at least one supply passage (12) can only exit via the at least one lubricant passage (9) of the drive element (6).

10. An actuator in accordance with one of the preceding claims, wherein the distributor (11) is arranged rotationally fixedly, with the at least one supply passage (12) of the distributor (11) being aligned such that an opening of the supply passage (12) faces a spatial region (R) in which the at least one drive element (6) meshes with the named other drive element (7).

11. An actuator in accordance with one of the preceding claims, wherein the distributor (11) can be provided with lubricant from a drive source side of the actuator (1), with a supply line (13) of the lubricating apparatus (8) that is in flow communication with the distributor (11) being led, preferably led coaxially, through an output shaft (5) connected to the drive element (6) and/or through a transmission (4) and/or through a drive source (2) of the actuator (1), with the distributor (11) being rotationally fixedly supported at the named supply line (13) and/or being rotationally fixedly supported at a bearing pipe that receives the named supply line (13) and that extends through the named output shaft (5) and/or through the transmission (4) and/or through the drive source (2), and with the supply line (13) and/or the bearing pipe receiving the supply line (13) being supported axially resiliently and/or axially displaceably at an end side of the actuator disposed opposite the drive element (6).

12. An actuator in accordance with one of the preceding claims, wherein the distributor (11) can be supplied with lubricant from a side of the drive element (6) disposed opposite the drive source (2) and/or is rotationally fixedly supported at the side of the drive element (6) disposed opposite the drive source (2).

13. An actuator in accordance with one of the preceding claims, wherein the drive element (6) having the at least one lubricant passage (9) is surrounded at least partly, preferably completely, by a lubricant cap (25) that is supported, in particular sealingly fastened, at a drive-side or output-side housing part; wherein the distributor (11) is rotationally fixedly supported by the lubricant cap (25); and wherein the lubricant cap (25) is designed from at least one, preferably two, cover plates (26, 27).

14. An actuator in accordance with one of the preceding claims, wherein the at least one lubricant passage (9) of the drive element (6) is provided in an opening region with a lubricant nozzle (18) for spraying the lubricant and/or for generating a back pressure for the lubricant.

## Revendications

1. Mécanisme d'actionnement destiné au réglage et au maintien d'une position de consigne d'un élément structural tel qu'une pale de rotor, une tour de grue, un châssis tournant et analogue, comprenant une source d'entraînement (2) destinée au déplacement de l'élément structural par le biais d'au moins deux éléments d'entraînement (6, 7) mutuellement en prise par engrènement, dont au moins un est entraîné par la source d'entraînement (2) et l'autre forme un élément entraîné, qui peut être relié à l'élément structural, ainsi qu'un dispositif de lubrification (8), associé à au moins un élément d'entraînement, destiné à la lubrification des éléments d'entraînement (6, 7) même dans une position d'entraînement stagnante, **caractérisé en ce qu'**au moins un canal de lubrifiant (9) destiné à l'amenée de lubrifiant jusqu'à au moins une paire de dents se trouvant en prise traverse au moins un des éléments d'entraînement (6) et débouche dans une zone de pied de dent de l'élément d'entraînement (6), le dispositif de lubrification (8) comportant un distributeur (11) doté d'au moins un canal d'amenée (12), qui peut être relié à l'au moins un canal de lubrifiant (9) dans l'au moins un élément d'entraînement (6), l'élément d'entraînement (6) pouvant être déplacé par rapport au distributeur (11) de telle manière que, selon la position de l'élément d'entraînement (6) par rapport au distributeur (11), l'au moins un canal de lubrifiant (9) de l'au moins un élément d'entraînement (6) est en liaison avec l'au moins un canal d'amenée (12) du distributeur (11) ou est coupé de l'au moins un dit canal d'amenée (12) du distributeur (11).

2. Mécanisme d'actionnement selon la revendication précédente, dans lequel l'élément d'entraînement (6) comporte plusieurs canaux de lubrifiant (9), qui sont disposés espacés les uns des autres de telle manière que, par le déplacement de l'élément d'entraînement (6) par rapport au distributeur (11), au moins un canal de lubrifiant (9) peut respectivement être relié de manière sélective à l'au moins un canal d'amenée (12) et respectivement au moins un autre canal de lubrifiant (9) peut être séparé de l'au moins un canal d'amenée (12).

3. Mécanisme d'actionnement selon la revendication précédente, dans lequel le contour de l'embouchure de l'au moins un canal d'amenée (12) et la position et le contour respectifs des plusieurs canaux de lubrifiant (9) sont adaptés les uns aux autres de telle manière que, lors du déplacement de l'élément d'entraînement (6) par rapport au distributeur (11), au moins un canal de lubrifiant (9) est toujours relié à l'au moins un canal d'amenée (11) et/ou deux canaux de lubrifiant (9) maximum sont toujours simultanément en liaison avec le canal d'amenée (12).

4. Mécanisme d'actionnement selon l'une des revendications précédentes, dans lequel l'élément d'entraînement (6) comportant l'au moins un canal de lubrifiant (9) est un pignon de sortie apte à être entraîné en rotation, avec une denture extérieure et/ou intérieure, et qui peut être tourné par rapport au distributeur (11), l'orifice de sortie de l'au moins un canal d'amenée (12) côté distributeur et l'orifice d'entrée du canal de lubrifiant (9) côté élément d'entraînement étant disposés de manière concentrique par rapport à l'axe de rotation de l'élément d'entraînement (7) dans la zone d'un cercle primitif commun.

5. Mécanisme d'actionnement selon la revendication précédente, dans lequel l'élément d'entraînement (6) comporte plusieurs canaux de lubrifiant (9) disposés en forme d'étoile, dont l'orifice d'entrée se trouve sur un cercle primitif commun de manière concentrique par rapport à l'axe de rotation de l'élément d'entraînement (6).

6. Mécanisme d'actionnement selon la revendication précédente, dans lequel plusieurs canaux de lubrifiant disposés en forme d'étoile se trouvent dans différents plans décalés dans le sens axial.

7. Mécanisme d'actionnement selon l'une des trois revendications précédentes, dans lequel l'élément d'entraînement (6) comporte un évidement intérieur (10), dans lequel le distributeur (11) est au moins en partie reçu, l'au moins un orifice d'entrée de l'au moins un canal de lubrifiant (9) de l'élément d'entraînement (6) étant disposé sur une surface circonférentielle de l'évidement intérieur (10) et l'embouchure de l'au moins un canal d'amenée (12) du distributeur (11) étant situé sur la circonférence du distributeur (11).

8. Mécanisme d'actionnement selon l'une des revendications 4 à 5, dans lequel le distributeur (11) et l'élément d'entraînement (6) comportent des faces terminales orientées l'une vers l'autre, sur lesquelles l'au moins un canal de lubrifiant (9) de l'élément d'entraînement (6) et l'au moins un canal d'amenée (12) du distributeur (11) possèdent respectivement des orifices, qui sont situés sur un cercle primitif commun de manière concentrique par rapport à l'axe de rotation de l'élément d'entraînement (6).

9. Mécanisme d'actionnement selon l'une des revendications précédentes, dans lequel le distributeur (11) est rendu étanche par rapport à l'élément d'entraînement (6) au moyen d'au moins un élément d'étanchéité (19), de telle manière que du lubrifiant sortant de l'au moins un canal d'amenée (12) peut sortir uniquement par le biais de l'au moins un canal de lubrifiant (9) de l'élément d'entraînement (6).

10. Mécanisme d'actionnement selon l'une des revendications précédentes, dans lequel le distributeur (11) est disposé fixe en rotation, l'au moins un canal d'amenée (12) du distributeur (11) étant orienté de telle manière qu'une embouchure du canal d'amenée (12) est orientée vers un espace (R), dans lequel l'au moins un élément d'entraînement (6) s'engrène avec ledit autre élément d'entraînement (7).

11. Mécanisme d'actionnement selon l'une des revendications précédentes, dans lequel le distributeur (11) peut être alimenté en lubrifiant depuis un côté source d'entraînement du mécanisme d'actionnement (1), une conduite d'alimentation (13) du dispositif de lubrification (8), qui est en liaison d'écoulement avec le distributeur (11), traversant, de préférence de manière coaxiale, un arbre de sortie (5) relié à l'élément d'entraînement (6) et/ou un engrenage (4) et/ou une source d'entraînement (2) du mécanisme d'actionnement (1), le distributeur (11) étant monté bloqué en rotation sur ladite conduite d'alimentation (13) et/ou bloqué en rotation sur un tube de palier recevant ladite conduite d'alimentation (13) et qui s'étend à travers ledit arbre de sortie (5) et/ou à travers l'engrenage (4) et/ou à travers la source d'entraînement (2), la conduite d'alimentation (13) et/ou le tube de palier recevant la conduite d'alimentation (13) étant montés de manière flexible dans le sens axial et/ou coulissante dans le sens axial sur une face terminale du mécanisme d'entraînement opposé à l'élément d'entraînement (6).

12. Mécanisme d'actionnement selon l'une des revendications précédentes, dans lequel le distributeur (11) peut être alimenté en lubrifiant depuis un côté de l'élément d'entraînement (6) opposé à la source d'entraînement (2) et/ou est monté bloqué en rotation sur le côté de l'élément d'entraînement (6) opposé à la source d'entraînement (2).

13. Mécanisme d'actionnement selon l'une des revendications précédentes, dans lequel l'élément d'entraînement (6) comportant l'au moins un canal de lubrifiant (9) est entouré au moins en partie, de préférence complètement, par un chapeau pour lubrifiant (25), qui est fixé en appui, en particulier de manière étanchéifiante, sur une partie de carter côté entraînement ou côté sortie, le distributeur (11) étant monté bloqué en rotation à travers le chapeau pour lubrifiant (25) et le chapeau pour lubrifiant (25) étant réalisé à partir d'un, de préférence de deux, disques de recouvrement (26, 27).

14. Mécanisme d'actionnement selon l'une des revendications précédentes, dans lequel l'au moins un canal de lubrifiant (9) de l'élément d'entraînement (6) est pourvu, dans une zone d'embouchure, d'un injecteur de lubrifiant (18) destiné à la pulvérisation du lubrifiant et/ou destiné à la génération d'une pression dynamique pour le lubrifiant.
